# EUROPEAN PATENT SPECIFICATION

(11) **EP 2 839 559 B1**
(45) Date of publication and mention of the grant of the patent: **14.12.2016**
(21) Application number: 13720073.9
(22) Date of filing: 13.03.2013
(51) Int. Cl.: H02G 3/00, A63B 21/045

(54) **TOOL FOR INSTALLATION OF BUILDING ELEMENTS**
WERKZEUG ZUM EINSETZEN VON BAUELEMENTEN
OUTIL D'INSTALLATION D'ÉLÉMENTS DE CONSTRUCTION

(30) Priority: 18.04.2012 IT VI20120090; 15.01.2013 IT PA20130002
(43) Date of publication of application: 25.02.2015
(73) Proprietor: Spallina, Giacomo, 90010 Geraci Siculo (PA) (IT); Valenza, Davide, 90027 Petralia Sottana (IT)
(72) Inventor: Spallina, Giacomo, 90010 Geraci Siculo (PA) (IT); Valenza, Davide, 90027 Petralia Sottana (IT)
(86) International application number: PCT/IB2013/051983
(87) International publication number: WO 2013/156879

(56) References cited:
- EP-A1- 2 128 945
- WO-A1-2005/083860
- US-A- 5 361 509

## Description

### Technical Field

The invention is generally applicable to the technical field of buildings and it particularly relates to a tool for installation of building elements on walls or planar supports.

### State of the art

The positioning and the stable anchoring of one or more building elements, such as electrical boxes or socket boxes, bricks, tiles and the like, inside a compartment formed in the front surface of a building wall or similar planar support, both horizontal and vertical, are generally carried out with the aid of specific tools, commonly named jigs. Typically, these tools comprise a case or quadrangular shaped frame designed to be positioned peripherally to the edge of the housing compartment in the wall or support. The frame has a central opening through which the element to be anchored is passed to be at least partially inserted into the compartment.

The connection between the elements to be anchored and the frame is carried out in a non-removable way by means of screws, joints, pins or other coupling elements of the known type.

The frame, in turn, is generally designed to be permanently attached to the front surface of the planar support after the insertion of the elements into the compartment, for example by means of screws or dowels to be inserted in appropriate holes provided in the frame.

Generally, the anchoring devices comprise elements for fixing the frame to the front surface of the flat support to maintain the fixed positioning of the elements in the compartments.

Acting on the fixing elements it is also possible to adjust the horizontal alignment of the elements inserted into the compartment.

US6209836, US5114105, US5927667, US5330137, US2005/001123, US6666419, US5931425 describe tools for positioning and anchoring electrical boxes to a building wall of the type cited above.

Such types of tools, however, have the drawback of requiring always the anchoring of the frame to the building wall, with a consequent increase of the working time, particularly when it is necessary to install more elements.

Furthermore, when the tool is designed to be interposed between the wall and the element to be fixed, the tool cannot be removed after the installation, and therefore it will be no longer reusable.

Last but not least, the central opening of the frame generally has a fixed size and therefore it can be used only with building elements having predefined size.

A further tool for anchoring electrical boxes to a wall is disclosed in EP2128945, which tool comprising an elongated rectangular plate with a longitudinal slit of fixed size for the sliding of two coupling elements adapted to engage opposite sides of the inner peripheral surface of the box, for anchoring the same to the plate and allowing the insertion and anchoring thereof in the compartment provided in the wall.

This known tool, however, is suitable to be used only for electrical boxes and not for positioning other building elements, such as bricks or elements which are not internally hollow.

Furthermore, the anchoring of the box to the plate is obtained by interference of the two coupling elements with a reduced portion of the two opposite sides of the box, not providing suitable stability of the coupling in particular in the case of relatively large boxes.

WO2005/083860 instead describes a device for flush inserting electrical boxes in a wall, which device comprising a clamp formed by a pair of longitudinal bars transversely offset with each other and connected by an elongated central element arranged orthogonally to the bars.

One bar of the pair is fixed while the other is slidable along the elongate central element by means of a threaded rod that extends along the whole central element.

In this way, varying the distance between the two bars it is possible to adapt the clamp to the height of the specific electrical box to be anchored to the wall.

A first drawback of this solution is represented by the fact that the presence of the central rod prevents the correct insertion of the box or any other possible element of the building between the two bars forming the clamp, limiting the contact surfaces to a longitudinal edge area of each bar.

Moreover, the presence of a mutual constraint between the two bars only at their central portions allows a minimal mutual oscillation around the central axis defined by the threaded rod, which could result in a not negligible error during positioning.

Further, the presence of a level on the elongated element and not on the rods could provide an incorrect measuring of the precise horizontality or verticality of the bars, depending on their orientation on the wall, just because they do not take account of possible inclinations thereof with respect to the central element.

Not least, in order to ensure the stable coupling between the clamp and the electrical box it is necessary a particularly tight and precise tightening of the clamp, because even a minimum play would involve the falling of the box, due to the reduced extension of the contact surfaces.

It also follows that the decoupling between the clamp and the box after the positioning of this latter in the compartment appears to be not smooth.

### Disclosure of the invention

An object of the present invention is to overcome the above cited drawbacks, providing a tool for the installation of building elements which will be particularly efficient and easy to use, other than relatively cheap.

A particular object is to provide a tool for the installation of building elements which could be easily adapted to the size of the specific building element to be installed to be used with a wide range of building elements different with each other in both size and type, always providing their stable coupling.

A further object is to provide a tool for the installation of building elements which could be replaceable and reusable after each application.

Still another object of the present invention is to provide a tool for the installation of building elements which could be applied to one or more building elements and which could be removed therefrom in a particularly easy and fast way.

Still another object is to provide a tool for the installation of building elements which does not require the tight clamping of the building element but can be used effectively even with a play in the coupling between the tool and the element.

Not the last object of the present invention is to provide a tool for the installation of building elements that is provided with a relatively wide contact surface with the element to be installed.

These objects, and others which will become more apparent hereinafter, are achieved by a tool for the installation of building elements which, according with claim 1, comprises a substantially planar frame having a central passage adapted to be positioned in correspondence of the compartment for the insertion of at least one building element to be installed thereinto and wherein said frame comprises at least two bars which extend along respective longitudinal directions substantially parallel to each other and having respective mutually facing retaining surfaces transversely spaced with a first predetermined transverse distance to define said passage and first adjustment means for adjusting said first transverse distance adapted to allow said facing surfaces to removably engage opposite faces of at least one building element and to temporarily support it during its installation in the compartment.

The tool is characterized in that said first adjustment means comprise a pair of connecting elements substantially elongated along respective transverse directions substantially orthogonal to said bars and longitudinally offset from each other to laterally delimit said passage.

Furthermore, each of said connecting elements is adapted to connect respective opposite longitudinal ends of said bars and has an intermediate section interposed between said bars having a variable transverse extension to adapt said first transverse distance to the maximum transverse dimension of the building element of to be installed.

Thanks to this combination of features the tool according to the invention will be easily adaptable to a wide range of building elements, such as socket boxes, electrical junction boxes, bricks, tiles, and building elements in general, different with each other for one or more dimensions.

Advantageously, the first adjustment means may comprise screw and nut means associated with said connecting elements to micrometrically adjust said transverse distance.

In particular, each of said intermediate sections of said connecting elements may be constituted by a threaded rod forming part of said screw and nut means.

According to an alternative embodiment, preferred but not limiting the present invention, said intermediate sections of said connecting elements may be elastically deformable at least longitudinally and each one has transverse ends constrained to respective of said bars to allow the mutual moving closer/away of the reciprocally opposite ends of said bars along a first transverse direction.

Suitably, each of said connecting elements may be adapted to move elastically between a first limit configuration in which said first transverse distance between said bars has a minimum value and a second limit configuration in which said first transverse distance has a maximum value.

Preferably, said connecting elements may be susceptible to deform in a substantially continuous way between said limit configurations to define any value of said first transverse distance between said minimum and maximum values.

Thanks to these additional features, the tool, in both configurations, may be applied and removed from the building elements to be installed in a particularly easy and fast way. Advantageously, each of said bars may present one or more abutment elements substantially longitudinal and projecting along a direction orthogonal to the plane defined by said frame, each of said one or more abutment elements facing a corresponding abutment element of the other of said bars to engage the inner and/or outer peripheral surface of the building element to be installed and for removably anchoring it to said frame.

In addition or alternatively, each of said bars may present one or more substantially transverse teeth adapted to engage the outer peripheral surface of the building element to be installed to firmly and removably lock it to said frame.

Moreover, each of said bars may include a plurality of through holes for corresponding pins or similar bodies adapted to removably engage corresponding openings of the building element to be installed and/or of the wall or planar support provided with the housing compartment for the temporary anchoring of said frame thereto.

By this way, the coupling of the tool with the elements to be installed may be realized in an effective manner without being necessary to provide a tight clamping of the bars on the interposed building elements.

Last but not least, the longitudinal bars may be substantially prismatic with respective inner planar faces facing each other defining for their whole extension the retaining surfaces.

Furthermore, if the building element will be an electrical box having an outer peripheral edge and an annular abutment placed at a fixed distance from said edge, said mutually facing planar inner faces of said bars may have a transverse dimension corresponding to the fixed distance of the annular abutment of the box from the outer peripheral edge thereof.

In this way, the tool can be effectively used even in presence of a play, less than the width of the bars, in the coupling between the bars and the elements to be installed, since in this case the building element, while undergoing a downward rotation, cannot fall as its outer upper wall will engage the edge of the upper bar.

Advantageous embodiments of the tool are provided according to the dependent claims.

### Brief disclosure of the drawings

Further features and advantages of the invention will become more apparent in light of the detailed description of two preferred but not exclusive embodiments of a tool according to the invention, shown only by way of non-limiting examples with the aid of the accompanying drawings in which:
FIG. 1 is a schematic elevational view of a tool of the invention in a first preferred embodiment during a installation step of two building elements E, E';
FIG. 2 is a partial front view of the tool of Fig. 1 coupled with two distinct building elements E, E' in a first way of use;
FIG. 3 is a partial front view of the tool of Fig. 1 coupled with only one building element E and according a second way of use;
FIG. 4 is an upper view of the tool of Fig. 1;
FIG. 5 is a side view of the tool of Fig. 1 coupled with a building element E housed into a compartment V of a wall P;
FIG. 6 is an elevational view of a tool of the invention in a second preferred embodiment;
FIG. 7 is a front view of the tool of Fig. 6;
FIG. 8 is an exploded front view of the tool of Fig. 6;
FIG. 9 is a side view of the tool of Fig. 6;
FIG. 10 is a lower view of the tool of Fig. 6.

### Best mode of carrying out the invention

With reference to the above figures, two distinct embodiments of a tool according to the invention are shown which are designed to be used in the installation of building elements inside a compartment formed in a wall or planar support.

In particular, the tool may be used to install building elements such as, but not limited to, socket electrical boxes, junction boxes, or other components of electrical installations with a substantially prismatic shape, or, further, bricks, tiles, ceramic tile and generally for all the elements commonly used for buildings and designed to be applied to walls or planar supports, both horizontal and vertical.

Generally, the tool may be used in association with any building element of substantially prismatic shape, both solid and hollow, and with a peripheral surface possibly provided with an open face for introducing thereinto, in a known manner, electrical components such as circuit breakers, switches and the like, not shown because of known type.

The tool will be designed to be coupled in a stable but removable manner to one or more building elements at a time for positioning and installing the same in a corresponding housing compartment formed in the wall or support, so that each building element will be housed in a complete or even partial manner into the compartment.

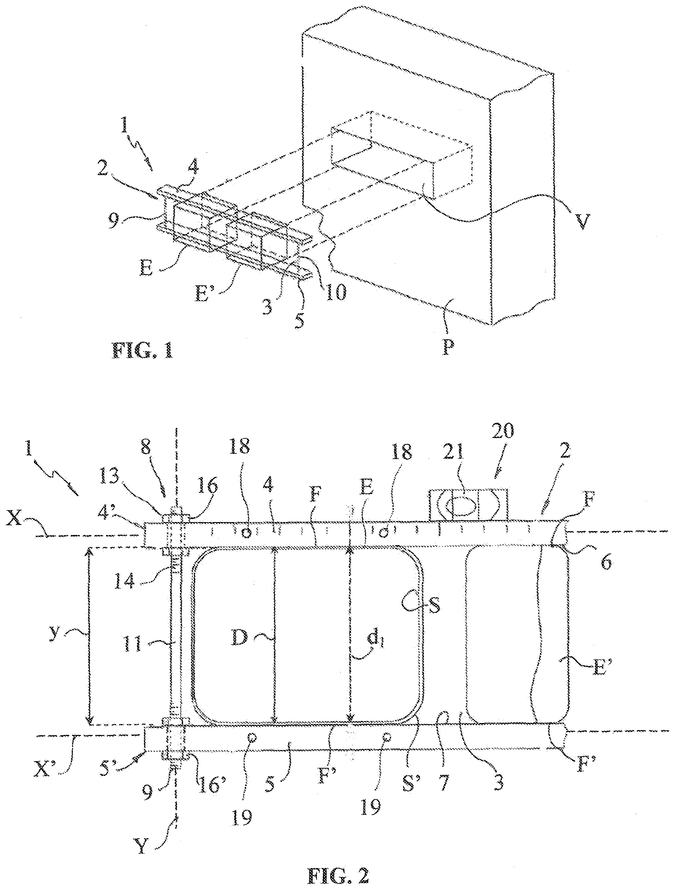

Fig. 1 shows a tool according to the invention, generally referred 1, during the installation of two box elements E, E', simply schematized, within a same compartment V arranged in a vertical wall P.

The tool 1 comprises a substantially planar frame 2 having a central passage 3 adapted to be positioned in correspondence of the compartment V for the insertion thereinto of at least one building element to be installed.

The frame 2 is substantially shaped as a picture frame and comprises an upper bar 4 and a lower bar 5 which extend along respective longitudinal directions X, X' substantially parallel to each other.

The bars 4, 5 have respective retaining surfaces 6, 7 facing each other and transversely spaced with an adjustable first transverse distance d₁ to define the central passage 3.

The frame 2 also comprises first adjustment means 8 for adjusting the first distance d₁ which means being adapted to allow said facing surfaces 6, 7 to removably engage opposite outer faces F, F' of each building element E, E' at least partially inserted in the passage 3, and to support it temporarily during the installation in the compartment V. The first adjustment means 8 comprise a pair of connecting elements 9, 10 substantially elongated along respective first transverse directions Y, Y 'substantially orthogonal to the bars 4, 5.

The two connecting elements 9, 10 are longitudinally offset from each other to laterally delimit the passage 3 and each of them is adapted to connect respective mutually opposite longitudinal ends 4', 5' and 4", 5" of the bars 4, 5 .

Moreover, each connecting element 9, 10 has an intermediate section, respectively 11 and 12, interposed between the two bars 4, 5 and having a variable transverse extension y, y' to adapt the first transverse distance d₁ to the maximum transverse dimension D of the building element E, E' to be installed, making the frame 2 also adapted to be disengaged from the elements to be installed E, E' once placed the same within the compartment V, to allow the recovery and recycling thereof.

As shown most clearly in Fig. 2, the first adjustment means 8 comprise screw and nut means 13 associated with the connecting elements 9, 10 to adjust micrometrically the first transverse distance d₁.

In particular, the two intermediate section 11, 12 of the connecting elements 9, 10 are each constituted by a threaded rod 14, 15 which forms part of the screw and nut means 13.

These latter also include, for each threaded rod 14, 15, at least one nut 16, 17 adapted to be screwed to one end of the corresponding threaded rod 14, 15, externally to the passage 3 and in contact with a corresponding bar 4, 5, to promote the moving closer/away in the transverse direction Y, Y' of the mutually opposite ends 4', 5' and 4", 5" of the bars 4, 5.

Preferably, each threaded rod 14, 15 may be associated with at least one pair of nuts, respectively 16, 16' and 17, 17', arranged on opposite sides with respect to the passage 3, so that each one is in contact with a corresponding bar 4, 5, allowing to move only one of them or both.

The adjustment of the first transverse distance d₁ will be carried out by screwing/unscrewing on the respective rods 14, 15 one or both pairs of nuts 16, 16', 17, 17' arranged on the same side with respect to the passage 3, with a direction that will depend on the type of the thread.

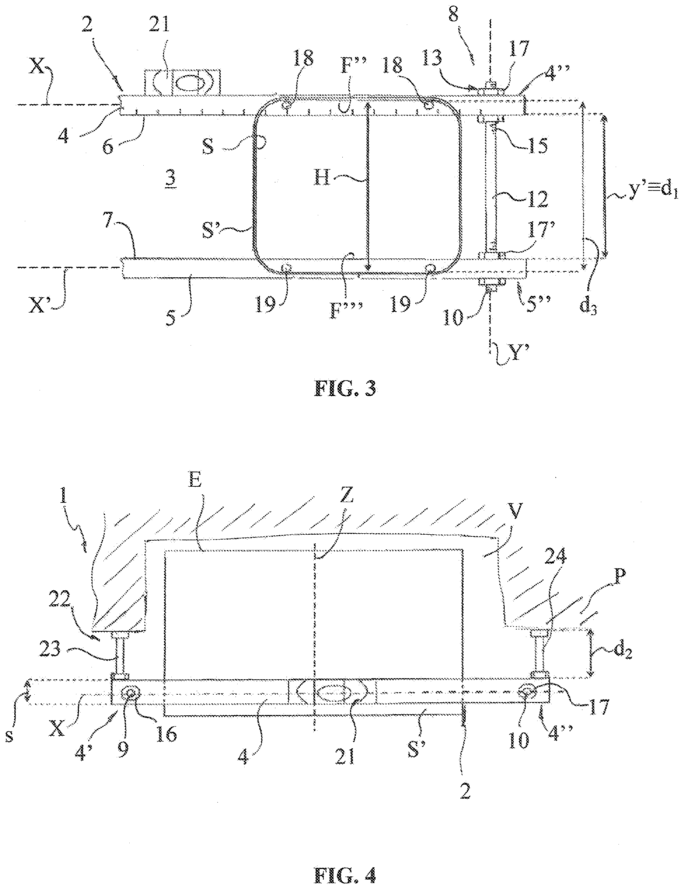

In Fig. 3 it can be also observed that the bars 4, 5 have a plurality of through holes 18, 19 which extend along a second transverse direction Z orthogonal to the plane π defined by the frame 2. The holes 18, 19 of each bar 4, 5 are longitudinally offset with each other and preferably distributed in such a way that the bar 4 has each of its holes 18 transversely aligned with a corresponding hole 19 of the other bar 5.

The above-mentioned through holes 18, 19 will be designed for the passage of corresponding pins or similar bodies, not shown, adapted to removably engage corresponding openings of the building element E to be installed and /or of the wall P or planar support provided with the housing compartment V, holding it on the frame 2 and increasing the stability of the mutual temporary anchorage.

This peculiar feature will also be particularly useful in the case where the elements E to be installed are electrical boxes designed to be inserted in an almost complete manner in the compartment V and provided with a front opening A for the insertion of electrical elements, not shown.

In this case, the pins can be inserted into the front opening A, in the through holes 18, 19, to removably engage by interference and friction the substantially longitudinal and transversely opposite flat faces F", F"' of the inner peripheral surface S of the electrical box E.

Advantageously, at least one bar 4 will comprise means 20 for controlling the inclination of the frame 2 with respect to the horizontal and/or the vertical. In the more simple and economical embodiment, the control means 20 will comprise an analog or digital level, such as a classical bubble level 21, fixed directly on one of the longitudinal bars 4, or on both. One or more additional levels may also be associated to the connecting elements.

In Fig. 4 second adjustment means 22 are shown for adjusting a second transverse distance d₂ of the frame 2 from the wall P or planar support provided with the compartment V. For example, the above mentioned second adjustment means 22 comprise for each bar 4, 5 a pair of spacing elements, only two of which being shown in the figure and indicated 23 and 24, designed to project from the frame 2 with an adjustable length along the second transverse direction Z. Each spacing element 23, 24 has one end associated to the frame 2 and the opposite end free and adapted to be placed leaning against the outer surface of the wall P.

The substantially prismatic shape of the bars 4, 5, possibly equipped with a graduated scale, will also allow to bring the same in full leaning against the respective planar faces F, F' of the outer peripheral wall S' of each building element E for the whole extension of their own planar inner faces 25, 26, so that each of which will define one of said retaining surfaces 6, 7.

Thus, the building element E will be locked between two planar faces 25, 26 mutually facing and each belonging to a respective bar 4, 5.

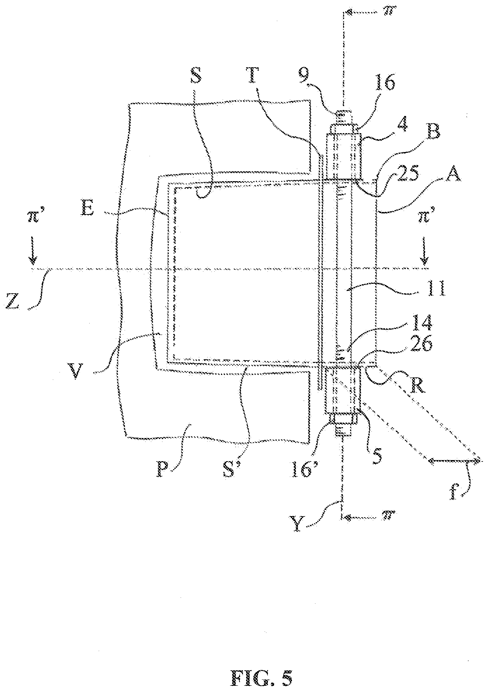

Fig. 5 shows the case in which the tool 1 is used in combination with a building element E which comprises or consists of an electrical box having an open outer peripheral edge B and an annular abutment T placed at a fixed distance f from the outer edge B.

The tool 1 has in turn a pair of prismatic bars 4, 5 having a thickness s substantially corresponding to or slightly less than such a fixed distance f, so that the retaining of the annular edge portion R of the box E between the abutment T and the outer edge B with the mutually opposite longitudinal surfaces 6, 7 will be obtained by interference coupling.

In this way, even if there is a not disregardable play between the edge portion R of the electrical box E and the retaining surfaces 6, 7, it will always ensure the stable but removable couplings between the frame 2 and the box E.

As matter of fact, even if in this case the box E may rotate slightly downward about an axis substantially perpendicular to the main plane π of the frame 2, the ratio between the transverse dimension f of the edge portion R of the box E and the thickness s of the bars 4, 5 will be so to cause a mutual interference sufficient to hold the box E in position inside the passage 3.

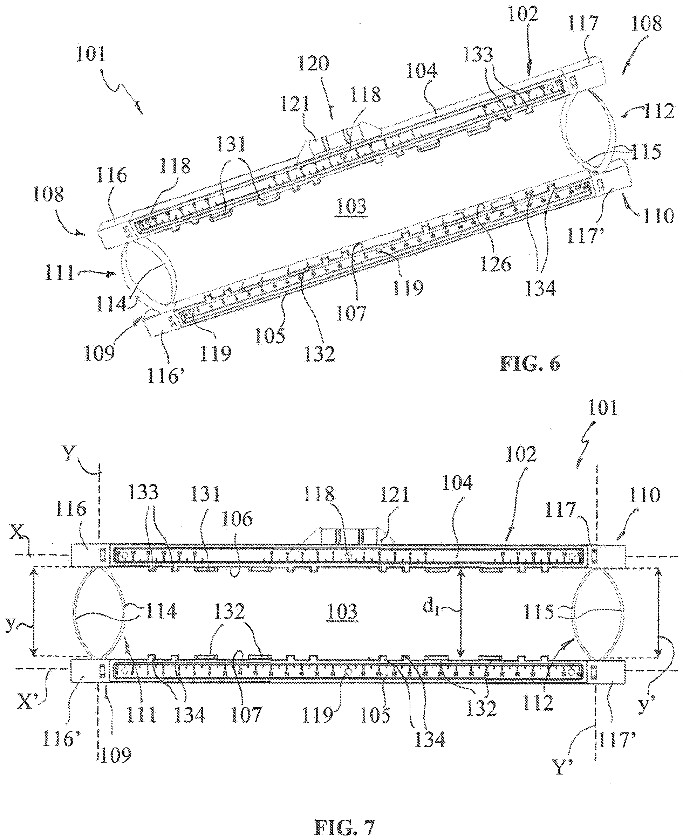

Fig. 6 shows a second preferred but not exclusive embodiment of the tool according to the invention, generally indicated with 101.

Even in this case, the tool 101 essentially comprises a frame 102 in the shape of rectangular picture frame having two prismatic and graduate longitudinal bars 104, 105 substantially parallel to one another, with planar faces 126, 127 defining respective retaining surfaces 106, 107 mutually facing and transversely spaced with an adjustable first transverse distance d₁ to define a central passage 103 adapted to be positioned in correspondence of the compartment V in which at least one building element E has to be introduced.

The bars 104, 105 are associated with first adjustment means 108 of the first distance d₁ comprising a pair of connecting elements 109, 110 substantially elongated along respective transverse directions Y, Y' substantially orthogonal to the bars 104, 105 and longitudinally offset from each other for laterally delimit the passage 103.

The connecting elements 109, 110 which connect the bars 104, 105 at respective opposite longitudinal ends 104', 105' and 104", 105" are fully contained between the same bars 104, 105 with at least the central intermediate section 111, 112 having a variable transverse extension y, y' to adapt the first transverse distance d₁ of the passage 103 to the maximum transverse dimension D of the building element E to be installed. In this embodiment the transverse connecting elements 109, 110 are at least longitudinally elastically deformable and each element has transverse ends 109', 110' and 109", 110" fastened to respective mutually opposite longitudinal ends 104', 105' and 104", 105" of the bars 104, 105 to allow their mutual moving closer/away along the corresponding transverse direction Y, Y', for adjusting the first distance d₁.

In particular, both the connecting elements 109, 110 will be susceptible to move elastically between a first limit configuration, wherein the first transverse distance d₁ and the transverse extension y, y' of the connecting elements 109, 110 have a minimum value and a second limit configuration wherein the first transverse distance d₁ and the transverse extension y, y' of the connecting elements 109, 110 have a maximum value. Thus, the tool 101 could adapt its configuration to a wide range of building elements E different with each other at least for the dimension D designed to be measured, during use, along the transverse direction Y, Y' defined by the connecting elements 109, 110. Preferably, the connecting elements 109, 110 will be susceptible to elastically deform in a substantially continuous manner between the two limit configurations so as to place the bars 104, 105 at a distance d₁ having any value between the minimum value and the maximum value, enhancing the flexibility of use of the tool 101.

The connecting elements 109, 110 may include or be constituted by any type of elastic elements, such as coil springs or the like.

In the embodiment shown, given as a non limiting example of the invention, each connecting element 109, 110 comprises a pair of C-shaped leaf springs 114, 115 with respective concavities opposite with each other and ends solidal with respective bars 104, 105, as more apparent from Fig 7.

In this way, compressing or extending the pairs of springs 114, 115 of each connecting element 109, 110 and thus changing the curvature, it can be possible to adjust the first distance d₁ between the transverse bars 104, 105 in a simple and precise manner. Moreover, each connecting element 109, 110 may include a pair of fixing blocks 116, 116', 117, 117' each integral with corresponding ends of the leaf springs 114, 115 and applied to each longitudinal end 104', 104", 105', 105" of a respective bar 104, 105.

In particular, the blocks 116, 116', 117, 117' will be internally hollow to house internally thereto respective end portions 104', 104", 105', 105" of the bars 104, 105.

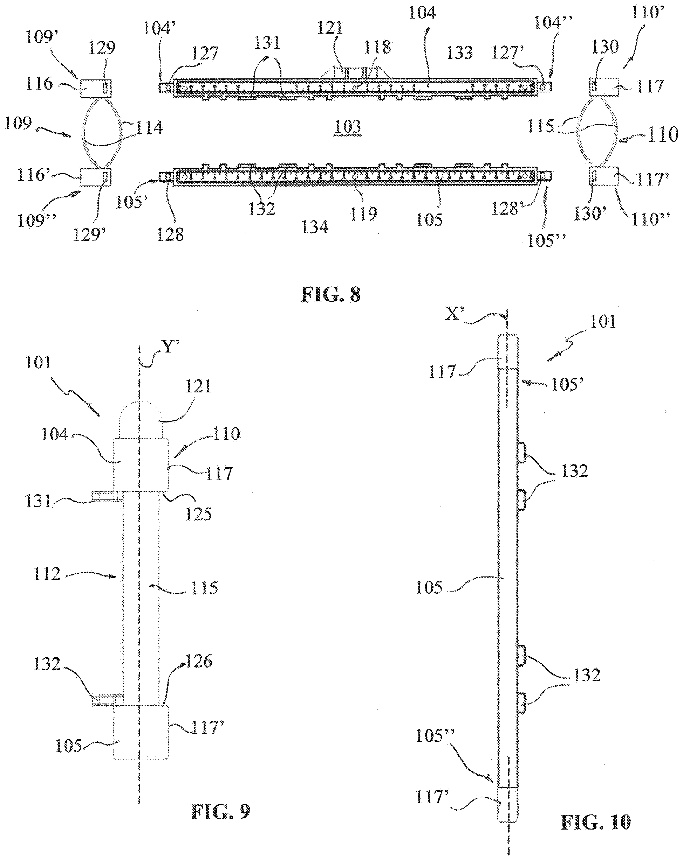

These latter, as more clearly visible from the exploded view of Fig. 8, will be designed to fit into a corresponding hollow block 116, 116', 117, 117' and will also be provided with respective projections 127, 127', 128, 128' adapted to snap engage recesses 129, 129', 130, 130' of the corresponding blocks 116, 116', 117, 117' upon their relative sliding.

To improve the stability of the coupling between the frame 102 and the building element E to be installed, each bar 104, 105 may have one or more substantially longitudinal abutment elements 131, 132 projecting along the second direction Z orthogonal to the plane π defined from the frame 102, which during use will be substantially parallel to the wall P or planar support in which the housing compartment is provided, as most clearly visible from Figs. 9 and 10.

Conveniently, each bar 104, 105 may also present one or more substantially transverse teeth 133, 134 adapted to engage by clamping the outer peripheral surface S' of the building element E to be installed to firmly and removably lock it to the frame 102. Advantageously, the bars 104, 105 are substantially symmetrical and specular with respect to a substantially longitudinal middle plane π' so that each abutment element 131 and each tooth 133 of one of the bars 104 faces a corresponding abutment element 132 and a corresponding tooth 134 of the other bar 105 to engage the inner peripheral surface S and/or outer S' of the building element E to be installed and removably anchor it to the frame 102.

Similar teeth and elements may also be provided on the bars 4, 5 of the tool 1 according to the disclosed first embodiment.

Similarly to the tool 1 according to the first configuration disclosed and shown in Figs. 1 to 5, the tool 101 in the second configuration may have a plurality of through holes 118, 119 on each bar 104, 105 for the passage of corresponding pins or similar anchoring bodies, not shown.

Similarly, one or more levels 121 may be provided for controlling the inclination of the frame 102 with respect the horizontal and/or the vertical, as well as second adjustment means, not shown, for adjusting the second distance of the frame 102 from the wall P or planar support provided with the compartment V.

Not least, according to a further not shown embodiment which may comprise either the use of a frame 2 according to the configuration of Fig. 1 or a frame 102 according to the configuration of Fig. 5, the tool may comprise at least one, preferably two support columns with adjustable length, for example telescopic, each having one end coupled to the frame 2, 102 and the opposite end adapted to rest on the floor or on a substantially horizontal reference plane.

This makes it even more convenient to use tool since it could be not necessary neither holding it with the hand nor attach it to the wall P in advance during the installation of the building element E, improving the precision of the installation.

The materials used for the different parts of the tool 1, 101 are not absolutely limiting of the present invention, both metal or plastic materials, or also natural materials, such as wood, could be used.

Of course, the elastically deformable parts of the connecting elements 109, 110, such as the springs 114, 115, may be realized in a material having suitable elastic constant, such as a polymeric material, and that will not necessarily be the same material used for the other components of the tool 1, 101.

Operatively, first of all the use of the tool 1, 101 needs the coupling by interference of the bars 4, 5; 104, 105 with one or more building elements E, E' by frontal insertion of the latter through the passage 3, 103 of the frame 2, 102.

The building element E, E' will be inserted so as to project from the rear of the frame 2, 102 with a more or less extended portion according the way of insertion into the compartment V.

When the building element E has maximum transverse dimension D different from the first minimum transverse distance d₁ between the opposite longitudinal surfaces 6, 7; 106, 107 of the bars 4, 5; 104, 105, the coupling step may comprise a step of adjusting this minimum distance d₁ so as to make it substantially coincident with the transverse dimension D as in Fig. 2.

Moreover, for the installation of electrical boxes E designed to be fully inserted in a compartment V, the minimum distance d₁ between the opposite longitudinal surfaces 6, 7; 106, 107 of the bars 4, 5; 104, 105 may be adjusted to a value lower than the maximum transverse dimension D of the box E.

In particular, the distance d₁ between the opposite longitudinal surfaces 6, 7; 106, 107 of the bars 4, 5; 104, 105 may be adjusted to bring the opposite and transversely aligned through holes 18, 19; 118, 119 to a third distance d₃ substantially coincident with the transverse height H of the front opening A, as in Fig. 3. By this way, it is possible to insert the pins through the respective through holes 18, 19; 118, 119 to engage by interference the inner peripheral wall S of the box E.

For the tool 1, first of all it will be necessary to make sure that the first transverse distance d₁ is not less than the maximum transverse dimension D of the building element E so that it can be possible to introduce it in the passage 3, where the building element E is designed to slightly project from the opening of the compartment V. When the building element E is an electric box designed to be installed with its open edge B flush with the outer surface of the support wall P, pins may be used which are introduced in the through holes 18, 19. In this case it will be necessary that the third distance d₃ between the transversely opposite holes 18, 19 is greater than the reference transverse dimension H.

Once the building element E is at least partially introduced within the central passage 3, it can possible to operate on the screw and nut means 13 to tighten the element E.

For the tool 101 it could be possible to operate on the connecting elements 109, 110 compressing them longitudinally so as to move closer the respective springs 114, 115 and bring them to the configuration of maximum extension, thus moving away the bars 104, 105 and allowing the insertion of the element E in the passage 103.

Upon the releasing of the springs 114, 115 the elastic return of the connecting elements 109, 110 toward the limit configuration with the lower extension occurs, obtaining the tightening of the building element E.

When the tool 101 is designed to be used with electrical boxes or internally hollow building elements E anchoring them through the longitudinal abutment elements 131, 132, it could proceed inversely, i.e. moving closer the bars 104, 105 with each other operating in transverse compression on the blocks 116, 116', 117, 117' so as to approach the bars 104, 105 and allow the abutment elements 131, 132 to be inserted into the opening A.

Thus, after the releasing of the blocks 116, 116', 117, 117' and to the elastic return of the connecting elements 109, 110 towards the resting configuration, the abutment elements 131, 132 will go to lean against the inner surface S of the building element E, so realizing the coupling.

Following the coupling between the frame 2, 102 and the building element E, carried out according to one of the procedures outlined above, it could provide the positioning of the frame 2, 102 leaning on the wall P or support, possibly adjusting the second distance d₂ by said second adjustment means 22, in order to place the building element E, or the building elements E, E' in the respective compartments V, controlling simultaneously the horizontal and/or vertical inclination.

It is however understood that the above steps of coupling and positioning may also be reversed compared to the sequence indicated above.

Of course, the installation operation of the elements E, E' may include all the additional steps normally required for stably fastening the same to the wall P or support, such as the use of mortar or adhesives, fastening with screws and the like, and which will therefore not described with more details.

From the above it appears evident that the invention achieves the intended objects and in particular to provide a tool for the installation of building elements that is easily adaptable to the dimensions of the specific building element to be installed to be used with a wide range of building elements different from each other both in size and type, always ensuring their stable coupling.

The tool according to the invention is susceptible of numerous modifications and variations, all falling within the inventive concept expressed in the appended claims. All the details may be replaced with other technically equivalent elements.

Even if the tool has been disclosed with particular reference to the attached figures, the reference numbers used in the description and in the claims are used to improve the intelligence of the invention and do not represent any limitation to the claimed scope of protection.

## Claims

1. Tool for the installation of building elements into a compartment formed in a wall or planar support, wherein a building element (E) comprises a substantially prismatic body designed to be at least partially inserted in the compartment (V), which tool comprises:
- a substantially planar frame (2, 102) having a central passage (3, 103) adapted to be located in correspondence of the compartment (V) for introducing thereinto at least one building clement (E) to be installed, wherein said frame (2, 102) comprises:
- at least two bars (4, 5; 104, 105) extending along respective longitudinal direction (X, X') substantially parallel with each other and having respective retaining surfaces (6, 7; 106, 107) mutually facing and transversally spaced with a first transverse distance (d₁) to define said passage (3, 103); and
- first adjustment means (8, 108) for adjusting said first transverse distance (d₁) between said longitudinal bars (4, 5, 104, 105) adapted to allow said facing retaining surfaces (6, 7; 106, 107) to removably engage opposite faces (F, F') of at least one building element (E) and to temporarily support it during the installation thereof into the compartment (V);
**characterized in that** said first adjustment means (8, 108) comprise a pair of connecting elements (9, 10; 109, 110) substantially elongated along respective first transverse directions (Y, Y') substantially orthogonal to said bars (4, 5; 104, 105) and longitudinally spaced with each other to laterally delimit said passage (3, 103), each of said connecting elements (9, 10; 109, 110) being adapted to connect respective opposite longitudinal ends (4', 5'; 4", 5"; 104', 105'; 104", 105") of said bars (4, 5; 104, 105) and having an intermediate section (11, 12; 111, 112) interposed between said bars (4, 5; 104, 105) with an adjustable transverse length (y, y') to adapt said first transverse distance (d₁) to the maximum distance (D) of the building element (E) to be installed.

2. Tool according claim 1, **characterized in that** said adjustment means (8) comprise screw and nut means (13) associated with said connecting elements (9, 10) for micrometrically adjust said first transverse distance (d₁).

3. Tool according claim 2, **characterized in that** each of said intermediate sections (11, 12) of said connecting elements (9, 10) comprises a threaded rod (14, 15) defining a portion of said screw and nut means (13), said screw and nut means (13) comprising for each of said threaded rods (14, 15) at least one nut (16, 17), preferably a pair of nuts, adapted to screw to the ends of said rods (14, 15) and placed into contact relationship with corresponding of said bars (4, 5) for promoting the reciprocal moving closer/away of their reciprocally opposite ends (4', 5'; 4", 5") along said first transverse directions (Y, Y').

4. Tool according claim 1, **characterized in that** said intermediate sections (111, 112) of said connecting elements (109, 110) are elastically deformable at least longitudinally and each has transverse ends (109', 109"; 110', 110") fastened to respective of said bars (104, 105) to promote the reciprocal moving closer/away of their reciprocally opposite ends (104', 105'; 104", 105") along said first transverse directions (Y, Y').

5. Tool according claim 4, **characterized in that** each of said connecting elements (109, 110) is adapted to elastically move between a first limit configuration wherein said first transverse direction (d₁) has a minimum value and a second limit configuration wherein said first transverse distance (d₁) has a maximum value, said connecting elements (109, 110) being susceptible to elastically deform in a substantially continuous manner between said limit configurations to define any value of said first transverse distance (d₁) between said minimum and maximum values.

6. Tool according claim 5, **characterized in that** each of said connecting elements (109, 110) comprises a pair of C-shaped leaf springs (114, 115) having respective concavities opposite with each other and ends solidal with a respective of said bars (104, 105).

7. Tool according claim 6, **characterized in that** each of said connecting elements (109, 110) comprises a pair of fixing blocks (116, 116'; 117, 117') each one being solidal with corresponding ends of said leaf springs (114, 115) and internally hollow for housing thereinto respective end portions (104', 105'; 104", 105") of said bars (104, 105).

8. Tool according claim 7, **characterized in that** each of said blocks (116, 116'; 117, 117') comprises a recess (129, 129'; 130, 130') adapted to snap fit with a projection (127, 127'; 128, 128') of a respective end portion (104', 105'; 104", 105") of said bars (104, 105).

9. Tool according any preceding claims, **characterized in that** each of said bars (4, 5; 104, 105) has one or more abutment elements (131, 132) substantially longitudinal and projecting along a second transverse direction (Z) orthogonal to the plane (π) defined by said frame (2, 102), each of said one or more abutment elements (131) of one of said bars (4; 104) facing a corresponding abutment element (132) of the other of said bars (5, 105) for engaging the inner and/or outer peripheral surface (S, S') of the building element (E) to be installed for removably anchoring it to said frame (2, 102).

10. Tool according any preceding claim, **characterized in that** each of said bars (4, 5; 104, 105) has one or more substantially transverse teeth (113, 134) adapted to engage the outer peripheral surface (S') of the building element (E) to be installed for firmly and removably locking it to said frame (2, 102).

11. Tool according any preceding claim, **characterized in that** each of said bars (4, 5; 104, 105) comprises a plurality of through holes (18, 19; 118, 119) for corresponding pins or similar bodies adapted to removably engage corresponding openings of the building element (E) to be installed and/or of the wall (P) or planar support provided with the housing compartment (V) for temporarily anchoring said frame (2, 102) thereto.

12. Tool according any preceding claim, **characterized in that** at least one of said bars (4, 5; 104, 105) comprises means (20, 120) for controlling the inclination of said frame (2, 102) with respect to the horizontal and/or to the vertical, said control means (20, 120) comprising at least one analog or digital level (21, 121) directly fixed on one of said longitudinal bars (4, 104).

13. Tool according any preceding claim, **characterized by** comprising second adjustment means (22) for adjusting a second transverse distance (d₂) of said frame (2, 102) from the wall (P) or planar support provided with the compartment (V).

14. Tool according any preceding claim, **characterized by** comprising at least one preferably two support columns with adjustable length each having one end coupable to said frame (2, 102) and the opposite end adapted to rest on the floor or on a substantially horizontal reference plane.

15. Tool according any preceding claim, intended for use with an electrical boxes (E) having an opened outer peripheral edge (B) and an annular abutment (T) located at a fixed distance (f) from said edge (B), **characterized in that** said longitudinal bars (4, 5; 104, 105) have a substantially prismatic shape with respective planar inner faces (25, 26; 125, 126) reciprocally facing and defining said retaining surfaces (6, 7; 106, 107), and having a transverse dimension (s) corresponding to the fixed distance (f) of the annular abutment (T) of the box (E) from the outer peripheral edge (B) thereof.

## Patentansprüche

1. Werkzeug zur Installation von Bauelementen in einen Raum, der in einer Wand oder einem ebenen Träger gebildet ist, wobei ein Bauelement (E) einen im Wesentlichen prismatischen Körper umfasst, der dafür gestaltet ist, zumindest teilweise in den Raum (V) eingesetzt zu werden, wobei das Werkzeug Folgendes umfasst:
- einen im Wesentlichen ebenen Rahmen (2, 102) mit einem zentralen Durchlass (3, 103), der dafür eingerichtet ist, in Übereinstimmung mit dem Raum (V) angeordnet zu werden, um dahinein mindestens ein zu installierendes Bauelement (E) einzuführen, wobei der Rahmen (2, 102) Folgendes umfasst:
- mindestens zwei Stäbe (4, 5; 104, 105), die sich entlang der jeweiligen Längsrichtung (X, X') und im Wesentlichen parallel zueinander erstrecken und jeweilige Halteflächen (6, 7; 106, 107) aufweisen, die einander zugewandt sind und in Querrichtung in einem ersten Querabstand (d₁) beabstandet sind, um den Durchlass (3, 103) zu definieren, und
- erste Justiermittel (8, 108) zum Justieren des ersten Querabstandes (d₁) zwischen den längs verlaufenden Stäben (4, 5, 104, 105), die dafür eingerichtet sind, den zugewandten Halteflächen (6, 7; 106, 107) zu ermöglichen, mit gegenüberliegenden Flächen (F, F') mindestens eines Bauelements (E) in lösbaren Eingriff zu gelangen und dieses während seiner Installation in den Raum (V) vorübergehend zu tragen,
**dadurch gekennzeichnet, dass** die ersten Justiermittel (8, 108) ein Paar aus Verbindungselementen (9, 10; 109, 110) umfassen, die im Wesentlichen entlang der jeweiligen Querrichtungen (Y, Y') gestreckt sind, im Wesentlichen rechtwinklig zu den Stäben (4, 5; 104, 105) liegen und in Längsrichtung voneinander beabstandet sind, um den Durchlass (3, 103) seitlich zu begrenzen, wobei jedes der Verbindungselemente (9, 10; 109, 110) dafür eingerichtet ist, jeweilige gegenüberliegende Längsenden (4', 5'; 4", 5"; 104', 105'; 104", 105") der Stäbe (4, 5; 104, 105) zu verbinden, und einen Mittelabschnitt (11, 12; 111, 112) aufweist, der mit einer justierbaren Querlänge (y, y') zwischen den Stäben (4, 5; 104, 105) eingefügt ist, um den ersten Querabstand (d₁) auf den Maximalahstand (D) des zu installierenden Bauelements (E) anzupassen.

2. Werkzeug nach Anspruch 1, **dadurch gekennzeichnet, dass** die Justiermittel (8) Schraube-und-Mutter-Mittel (13) umfassen, die zu den Verbindungselementen (9, 10) gehören, um den ersten Querabstand (d₁) mikrometergenau zu justieren.

3. Werkzeug nach Anspruch 2, **dadurch gekennzeichnet, dass** jeder der Mittelabschnitte (11, 12) der Verbindungselemente (9, 10) eine Gewindestange (14, 15) umfasst, die einen Abschnitt der Schraube-und-Mutter-Mittel (13) definiert, wobei die Schraube-und-Mutter-Mittel (13) für jede der Gewindestangen (14, 15) mindestens eine Mutter (16, 17) umfassen, vorzugsweise ein Paar Muttern, die dafür eingerichtet sind, auf die Enden der Stangen (14, 15) geschraubt und in einem Kontaktverhältnis zum entsprechenden der Stäbe (4, 5) angeordnet zu werden, um die beiderseitige Bewegung näher zu / weg von den beiderseitig gegenüberliegenden Enden (4', 5'; 4", 5") entlang der ersten Querrichtungen (Y, Y') zu fördern.

4. Werkzeug nach Anspruch 1, **dadurch gekennzeichnet, dass** die Mittelabschnitte (111, 112) der Verbindungselemente (109, 110) mindestens in Längsrichtung elastisch verformbar sind und jeweils Querenden (109', 109"; 110', 110") aufweisen, die an dem jeweiligen der Stäbe (104, 105) angebracht sind, um die beiderseitige Bewegung näher zu / weg von den beiderseitig gegenüberliegenden Enden (104', 105'; 104", 105") entlang der ersten Querrichtungen (Y, Y') zu fördern.

5. Werkzeug nach Anspruch 4, **dadurch gekennzeichnet, dass** jedes der Verbindungselemente (109, 110) dafür eingerichtet ist, sich elastisch zwischen einer ersten Begrenzungsgestaltung, in der die erste Querrichtung (d₁) einen Minimalwert aufweist, und eine zweiten Begrenzungsgestaltung zu bewegen, in der die erste Querrichtung (d₁) einen maximalen Wert aufweist, wobei die Verbindungselemente (109, 110) für eine elastische Verformung in einer im Wesentlichen kontinuierlichen Weise zwischen den Begrenzungsgestaltungen empfänglich sind, um einen beliebigen Wert des ersten Querabstandes (d₁) zwischen dem Minimal- und dem Maximalwert zu definieren.

6. Werkzeug nach Anspruch 5, **dadurch gekennzeichnet, dass** jedes der Verbindungselemente (109, 110) ein Paar C-förmiger Blattfedern (114, 115) umfasst, die einander gegenüber jeweilige Wölbungen sowie Enden aufweisen, die einstückig mit einem jeweiligen der Stäbe (104, 105) gebildet sind.

7. Werkzeug nach Anspruch 6, **dadurch gekennzeichnet, dass** jedes der Verbindungselemente (109, 110) ein Paar Fixierblöcke (116, 116'; 117, 117') umfasst, von denen ein jeder einstückig mit entsprechenden Enden der Blattfedern (114, 115) gebildet und innerlich hohl ist, um darin jeweilige Endabschnitte (104', 105'; 104", 105") der Stäbe (104, 105) zu beherbergen.

8. Werkzeug nach Anspruch 7, **dadurch gekennzeichnet, dass** jeder der Blöcke (116, 116'; 117, 117') eine Vertiefung (129, 129'; 130, 130') umfasst, die dafür eingerichtet ist, eine Schnappverbindung mit einem Vorsprung (127, 127'; 128, 128') eines jeweiligen Endabschnitts (104', 105'; 104", 105") der Stäbe (104, 105) einzugehen.

9. Werkzeug nach einem der vorhergehenden Ansprüche, **dadurch gekennzeichnet, dass** jeder der Stäbe (4, 5; 104, 105) ein oder mehrere Anschlagelemente (131, 132) aufweist, die im Wesentlichen längs verlaufen und entlang einer zweiten Querrichtung (Z) rechtwinklig zur Ebene (π) hervorstehen, die vom Rahmen (2, 102) definert ist, wobei jedes des einen oder der mehreren Anschlagelemente (131) von einem der Stäbe (4; 104) einem entsprechenden Anschlagelement (132) des anderen der Stäbe (5, 105) zugewandt ist, um mit der inneren und/oder der äußeren Umfangsfläche (S, S') des zu installierenden Bauelements (E) in Eingriff zu gelangen, um dieses lösbar am Rahmen (2, 102) zu verankern.

10. Werkzeug nach einem der vorhergehenden Ansprüche, **dadurch gekennzeichnet, dass** jeder der Stäbe (4, 5; 104, 105) einen oder mehrere im Wesentlichen quer verlaufende Zähne (113, 134) aufweist, die dafür eingerichtet sind, mit der äußeren Umfangsfläche (S') des zu installierenden Bauelements (E) in Eingriff zu gelangen, um es formschlüssig und lösbar am Rahmen (2, 102) zu arretieren.

11. Werkzeug nach einem der vorhergehenden Ansprüche, **dadurch gekennzeichnet, dass** jeder der Stäbe (4, 5; 104, 105) mehrere Durchgangsöffnungen (18, 19; 118, 119) für entsprechende Stifte oder ähnliche Körper umfasst, die dafür eingerichtet sind, mit entsprechenden Öffnungen des zu installierenden Bauelements (E) und/oder der Wand (P) oder einem ebenen Träger, die/der mit dem Gehäuseraum (V) bereitgestellt ist, in Eingriff zu gelangen, um den Rahmen (2, 102) vorübergehend daran zu verankern.

12. Werkzeug nach einem der vorhergehenden Ansprüche, **dadurch gekennzeichnet, dass** mindestens einer der Stäbe (4, 5; 104, 105) Mittel (20, 120) zum Steuern der Neigung des Rahmens (2, 102) im Verhältnis zur Horizontalen und/oder zur Vertikalen umfasst, wobei die Steuermittel (20, 120) mindestens eine analoge oder digitale Wasserwaage (21, 121) umfassen, die direkt an den längs verlaufenden Stäben (4, 104) befestigt ist.

13. Werkzeug nach einem der vorhergehenden Ansprüche, **dadurch gekennzeichnet, dass** es zweite Justiermittel (22) zum Justieren eines zweiten Querabstandes (d₂) des Rahmens (2, 102) zur Wand (P) oder zum ebenen Träger, die/der mit dem Raum (V) bereitgestellt ist, umfasst.

14. Werkzeug nach einem der vorhergehenden Ansprüche, **dadurch gekennzeichnet, dass** es mindestens eine, bevorzugt zwei Tragesäulen mit justierbarer Länge umfasst, die jeweils ein Ende aufweisen, das mit dem Rahmen (2, 102) koppelbar ist, und deren gegenüberliegendes Ende dafür eingerichtet ist, auf dem Boden oder einer im Wesentlichen horizontalen Bezugsebene zu liegen.

15. Werkzeug nach einem der vorhergehenden Ansprüche, vorgesehen für die Verwendung mit einem Schaltkasten (E), eine geöffnete äußere Umfangskante (B) und einen ringförmigen Anschlag (T) aufweisend, der in einem festen Abstand (f) zur Kante (B) angeordnet ist, **dadurch gekennzeichnet, dass** die längs verlaufenden Stäbe (4, 5; 104, 105) eine im Wesentlichen prismatische Form mit jeweiligen ebenen Innenflächen (25, 26; 125, 126) aufweisen, die beidseitig zugewandt sind und die die Halteflächen (6, 7; 106, 107) definieren und eine Querabmessung (s) aufweisen, die dem festen Abstand (f) des ringförmigen Anschlags (T) des Kastens (E) zu dessen äußerer Umfangskante (B) entspricht.

## Revendications

1. Outil d'installation d'éléments de construction dans un compartiment formé dans une paroi ou un support plan, dans lequel un élément de construction (E) comprend un corps substantiellement prismatique conçu pour être au moins partiellement inséré dans le compartiment (V), ledit outil comprenant :
- un bâti substantiellement plan (2, 102) comportant un passage central (3, 103) adapté pour être placé en correspondance avec le compartiment (V) pour y introduire au moins un élément de construction (E) à installer, dans lequel ledit bâti (2, 102) comprend :
- au moins deux barres (4, 5 ; 104, 105) qui s'étendent selon une direction longitudinale respective (X, X') de manière substantiellement parallèle entre elles et qui comportent des surfaces de rétention respectives (6, 7 ; 106, 107) qui se font face mutuellement et espacées transversalement à une première distance transversale (d₁) pour définir ledit passage (3, 103) ; et
- un premier moyen d'ajustement (8, 108) pour ajuster ladite première distance transversale (d₁) entre lesdites barres longitudinales (4, 5, 104, 105) adapté pour permettre auxdites surfaces de rétention qui se font face (6, 7 ; 106, 107) de s'engager de façon amovible avec des faces opposées (F, F') d'au moins un élément de construction (E) et pour le supporter temporairement durant son installation dans le compartiment (V) ;
**caractérisé en ce que** ledit premier moyen d'ajustement (8, 108) comprend une paire d'éléments de connexion (9, 10 ; 109, 110) substantiellement allongés selon des premières directions transversales respectives (Y, Y') substantiellement orthogonales auxdites barres (4, 5 ; 104, 105) et espacées longitudinalement entre elles pour délimiter latéralement ledit passage (3, 103), chacun desdits éléments de connexion (9, 10 ; 109, 110) étant adapté pour connecter des extrémités longitudinales opposées respectives (4', 5' ; 4", 5" ; 104', 105' ; 104", 105") desdites barres (4, 5 ; 104, 105) et ayant une section intermédiaire (11, 12 ; 111, 112) interposée entre lesdites barres (4, 5 ; 104, 105) avec une longueur transversale ajustable (y, y') pour adapter ladite première distance transversale (d₁) à la distance maximale (D) de l'élément de construction (E) à installer.

2. Outil selon la revendication 1, **caractérisé en ce que** ledit moyen d'ajustement (8) comprend un moyen à boulon et écrou (13) associé auxdits éléments de connexion (9, 10) pour ajuster micrométriquement ladite première distance transversale (d₁).

3. Outil selon la revendication 2, **caractérisé en ce que** chacune desdites sections intermédiaires (11, 12) desdits éléments de connexion (9, 10) comprend une tige filetée (14, 15) qui définit une portion dudit moyen à boulon et écrou (13), ledit moyen à boulon et écrou (13) comprenant pour chacune desdites tiges filetées (14, 15) au moins un écrou (16, 17), de préférence une paire d'écrous, adaptés pour se visser aux extrémités desdites tiges (14, 15) et placés en contact avec des barres correspondantes desdites barres (4, 5) pour favoriser le déplacement réciproque de rapprochement/éloignement de leurs extrémités réciproquement opposées (4', 5' ; 4", 5") selon lesdites premières directions transversales (Y, Y').

4. Outil selon la revendication 1, **caractérisé en ce que** lesdites sections intermédiaires (111, 112) desdits éléments de connexion (109, 110) sont élastiquement déformables au moins longitudinalement et comportent chacune des extrémités transversales (109', 109" ; 110', 110") fixées à des barres respectives desdites barres (104, 105) pour favoriser le déplacement réciproque de rapprochement/éloignement de leurs extrémités réciproquement opposées (104', 105' ; 104", 105") selon lesdites premières directions transversales (Y, Y').

5. Outil selon la revendication 4, **caractérisé en ce que** chacun desdits éléments de connexion (109, 110) est adapté pour se déplacer élastiquement entre une première configuration limite dans laquelle ladite première direction transversale (d₁) présente une valeur minimale et une deuxième configuration limite dans laquelle ladite première distance transversale (d₁) présente une valeur maximale, lesdits éléments de connexion (109, 110) étant susceptibles de se déformer élastiquement de manière substantiellement continue entre lesdites configurations limite pour définir une valeur quelconque de ladite première distance transversale (d₁) entre lesdites valeurs minimale et maximale.

6. Outil selon la revendication 5, **caractérisé en ce que** chacun desdits éléments de connexion (109, 110) comprend une paire de ressorts à lame en forme de C (114, 115) présentant des concavités opposées entre elles respectives et des extrémités solidaires avec une barre respective desdites barres (104, 105).

7. Outil selon la revendication 6, **caractérisé en ce que** chacun desdits éléments de connexion (109, 110) comprend une paire de blocs de fixation (116, 116' : 117, 117') qui sont chacun solidaires avec des extrémités correspondantes desdits ressorts à lame (114, 115) et qui sont creux pour y loger des portions d'extrémité respectives (104', 105' ; 104", 105") desdites barres (104, 105).

8. Outil selon la revendication 7, **caractérisé en ce que** chacun desdits blocs (116, 116'; 117, 117') comprend un renfoncement (129, 129'; 130, 130') adapté pour s'assembler par enclenchement avec une projection (127, 127' ; 128, 128') d'une portion terminale respective (104', 105' ; 104", 105") desdites barres (104, 105).

9. Outil selon l'une quelconque des revendications précédentes, **caractérisé en ce que** chacune desdites barres (4, 5 ; 104, 105) comporte un ou plusieurs éléments de butée (131, 132) substantiellement longitudinaux et qui se projettent selon une deuxième direction transversale (Z) orthogonale au plan (π) défini par ledit bâti (2, 102), chacun desdits un ou plusieurs éléments de butée (131) de l'une desdites barres (4 ; 104) faisant face à un élément de butée correspondant (132) de l'autre barre parmi lesdites barres (5, 105) pour s'engager avec la surface périphérique interne et/ou externe (S, S') de l'élément de construction (E) à installer pour l'ancrer de façon amovible audit bâti (2, 102).

10. Outil selon l'une quelconque des revendications précédentes, **caractérisé en ce que** chacune desdites barres (4, 5 ; 104, 105) comporte une ou plusieurs dents substantiellement transversales (113, 134) adaptées pour s'engager avec la surface périphérique externe (S') de l'élément de construction (E) à installer pour le verrouiller de manière ferme et amovible avec ledit bâti (2, 102).

11. Outil selon l'une quelconque des revendications précédentes, **caractérisé en ce que** chacune desdites barres (4, 5 ; 104, 105) comprend une pluralité de trous traversants (18, 19 ; 118, 119) pour des broches ou corps similaires correspondants adaptés pour s'engager de manière amovible dans des ouvertures correspondantes de l'élément de construction (E) à installer et/ou de la paroi (P) ou du support plan pourvu du compartiment de logement (V) pour y ancrer temporairement ledit bâti (2, 102).

12. Outil selon l'une quelconque des revendications précédentes, **caractérisé en ce qu'**au moins l'une desdites barres (4, 5 ; 104, 105) comprend un moyen (20, 120) pour contrôler l'inclinaison dudit bâti (2, 102) par rapport à l'horizontale et/ou la verticale, ledit moyen de contrôle (20, 120) comprenant au moins un niveau analogique ou numérique (21, 121) directement fixé à l'une desdites barres longitudinales (4, 104).

13. Outil selon l'une quelconque des revendications précédentes, **caractérisé en ce qu'**il comprend des deuxièmes moyen d'ajustement (22) pour ajuster une deuxième distance transversale (d₂) dudit bâti (2, 102) par rapport à la paroi (P) ou au support plan pourvu du compartiment (V).

14. Outil selon l'une quelconque des revendications précédentes, **caractérisé en ce qu'**il comprend au moins une, et de préférence deux, colonnes de support à longueur réglable comportant chacune une extrémité qui peut être accouplée audit bâti (2, 102) et l'extrémité opposée qui est adaptée pour reposer sur le sol ou sur un plan de référence substantiellement horizontal.

15. Outil selon l'une quelconque des revendications précédentes, destiné à être utilisé avec des boîtiers électriques (E) présentant un bord périphérique externe ouvert (B) et une butée annulaire (T) située à une distance fixe (f) dudit bord (B), **caractérisé en ce que** lesdites barres longitudinales (4, 5 ; 104, 105) présentent une forme substantiellement prismatique avec des faces internes planes respectives (25, 26 ; 125, 126) qui se font face réciproquement et définissant lesdites surfaces de rétention (6, 7 ; 106, 107), et présentant une ou plusieurs dimensions transversales correspondant à la distance fixe (f) de la butée annulaire (T) du boîtier (E) depuis son bord périphérique externe (B).
